Europäisches Patentamt

European Patent Office

Office européen des brevets

(19)

(11) Veröffentlichungsnummer : **0 403 760 B1**

(12) # EUROPÄISCHE PATENTSCHRIFT

(45) Veröffentlichungstag der Patentschrift :
30.09.92 Patentblatt 92/40

(51) Int. Cl.⁵ : **H04N 5/64**

(21) Anmeldenummer : **90107454.2**

(22) Anmeldetag : **19.04.90**

(54) **Fernsehgerät.**

(30) Priorität : **23.06.89 DE 3920623**

(43) Veröffentlichungstag der Anmeldung :
**27.12.90 Patentblatt 90/52**

(45) Bekanntmachung des Hinweises auf die
Patenterteilung :
**30.09.92 Patentblatt 92/40**

(84) Benannte Vertragsstaaten :
**AT CH DE FR IT LI**

(56) Entgegenhaltungen :
**BE-A- 553 434**
**DE-A- 2 806 580**
**FR-A- 1 320 552**

(73) Patentinhaber : **GRUNDIG E.M.V.**
**Elektro-Mechanische Versuchsanstalt Max**
**Grundig holländ. Stiftung & Co. KG.**
**Kurgartenstrasse 37**
**W-8510 Fürth/Bay. (DE)**

(72) Erfinder : **Prölss, Alfred, Grundig E.M.V.**
**Max Grund., hol. Stif.,Co KG, Kurgartenstrasse**
**37**
**W-8510 Fürth/Bay (DE)**
Erfinder : **Fraser, Simon Bain, Grundig E.M.V.**
**Max Grund., hol. Stif.,Co KG, Kurgartenstrasse**
**37**
**W-8510 Fürth/Bay (DE)**

**Beschreibung**

Die Erfindung betrifft ein Fernsehgerät, das über einen Fernbedienungsgeber zu bedienen ist.

Es sind Fernsehgeräte mit den verschiedenartigsten Frontgestaltungen bekannt, die jedoch den Nachteil haben, daß die Bildröhre über einen aufwendig gestalteten und herzustellenden Rahmen eingefaßt ist. Zusätzlich zu diesem Bildröhrenrahmen sind aufwendige Befestigungselemente sowie Zierelemente erforderlich. Ferner ist bei der rahmenartigen Einfassung der Bildröhre ein kostenträchtiger Übergang zum Gehäuse erforderlich und somit keine farbneutrale Frontgestaltung möglich, da Bildröhre und Rahmen sowie frontseitiger Gehäuseübergang schwerlich von gleicher Struktur und gleichem Farbton sein können. Zusätzlich wird bei einer Vielzahl von Fernsehgeräten noch vor der Bildröhren-Sichtfläche eine Filter-Frontscheibe davorgesetzt, was wiederum ein zusätzliches Teil darstellt, das mit zusätzlichen Halterungen am Gehäuse oder am Bildröhrenrahmen des Gerätes zu befestigen ist.

Aufgabe der Erfindung ist es daher, ein Fernsehgerät derart zu gestalten, daß ein üblicherweise vorhandener aufwendiger Frontrahmen entfällt, ohne jedoch eine Bildbeeinträchtigung z.B. durch Spiegelung oder fehlende Filterscheibe in Kauf nehmen zu müssen.

Diese Aufgabe wird durch die kennzeichnenden Merkmale im Anspruch 1 gelöst.

Die Erfindung wird nachfolgend anhand der Zeichnungen erläutert.

Fig. 1 ist eine perspektivische Darstellung eines erfindungsgemäßen Fernsehgerätes in Frontansicht,

Fig. 2 ist eine perspektivische Darstellung eines Fernsehgerätes nach Fig. 1, jedoch in Seitenansicht.

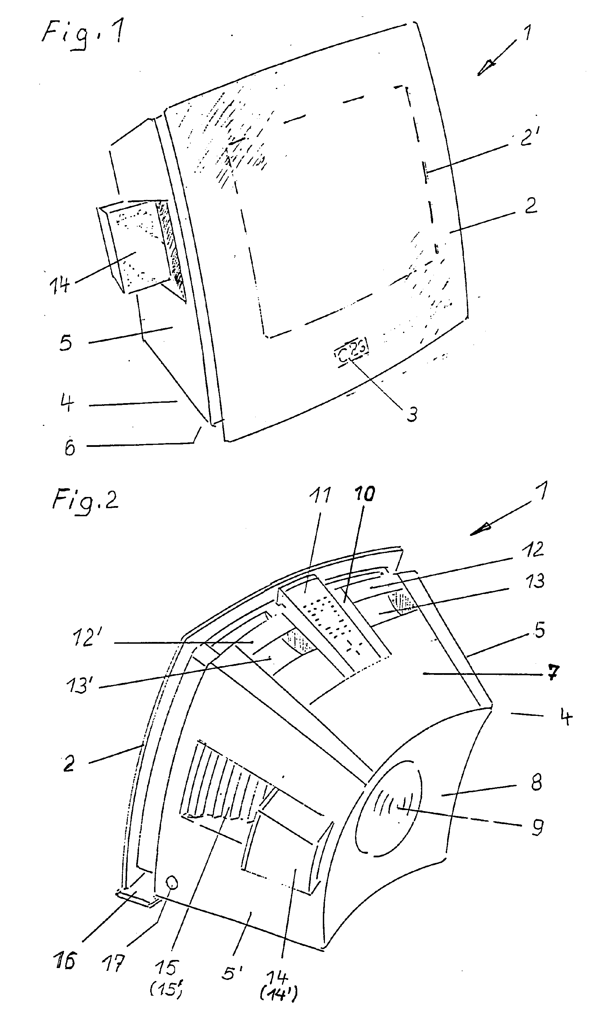

In der Fig. 1 ist ein Fernsehgerät 1 dargestellt, das frontseitig nur aus einer mit dem Gerät verbundenen kugelkappenförmig oder kissenförmig gekrümmten, farblich getönten, eine rechteckige Außenkontur aufweisenden, rahmenlosen Frontscheibe 2 besteht. Das eigentliche von der dahinterliegenden Fernsehröhre dargestellte Bild ist nur im gestrichelt angegebenen Bildbereich 2' zu erkennen. Weitere Anzeigefelder, so z.B. die Kanalanzeige 3, sind außerhalb des Bildbereiches angeordnet und auch nur bei eingeschaltetem Gerät durch die Frontscheibe hindurch zu erkennen. Alle gewünschten Gerätefunktionen werden über einen Fernbedienungsgeber dem Gerät eingegeben. Die Außenwandteile des Gehäuses 4 schließen sich hinter der Frontscheibe konisch verjüngend an, so daß das Gehäuse einen Pyramidenstumpf bildet. Die Frontscheibe 2 ist mechanisch fest mit dem Gehäuse 4 verbunden, jedoch derart, daß die Verbindungsstellen von der Vorderseite des Gerätes her nicht zu erkennen sind. Für die Einfärbung der Frontscheibe kann ein unterschiedlicher Farbton gewählt werden, ebenfalls kann die Filterwirkung entsprechend den Erfordernissen mit der Bildröhre abgestimmt werden.

Aus der Fig. 2 ist die sich hinter der Frontscheibe 2 anschließende Gehäuseform zu erkennen. Die sich konisch gleichmäßig verjüngenden Seitenteile in Form der durchgezogenen Seitenflächen 5, 5', der Bodenfläche 6 und der Deckfläche 7 enden in einer Rückseite, die aus einer nach innen kugelkappenförmig gewölbten Rückwandfläche 8 besteht, wobei auch hier die Außenkontur der Rückwandfläche durch den Pyramidenstumpf des Gehäuses bedingt rechteckförmig ausgebildet ist. Im inneren Bereich der Rückwandfläche 8 ist eine kalottenförmige Ausbuchtung 9 vorgesehen. Unmittelbar hinter der Frontscheibe und von dieser vollkommen verdeckt, ist in der Deckfläche eine Vertiefung 10 angeordnet, in die ein Fernbedienungsgeber 11 eingelegt ist. Der Fernbedienungsgeber ist derart ausgebildet, daß das Gerät auch bei eingelegtem Fernbedienungsgeber bedienbar ist. Beidseitig des Fernbedienungsgebers 11 weist die Deckfläche 7 des Gehäuses 4 Griffleisten 12, 12' auf, die sich durch in die Deckfläche hineingearbeiteten Griffmulden 13, 13' ergeben. Die Seitenwandflächen 5, 5' weisen beidseitig je eine Kammer auf, in die lagenveränderbare Lautsprecherboxen 14, 14' eingesetzt sind. Die Kammern für die Lautsprecherboxen weisen zur Frontseite hin schräg nach außen verlaufende Schallführungsflächen 15, 15' auf. Das Fernsehgerät weist ferner im Frontbereich eine Stelleiste 16 auf, die mit dem Gehäuse 4 über ein Scharnier 17 verbunden ist. Hierdurch kann das Fernsehgerät in verschiedene Winkellagen gestellt werden, so daß die Frontscheibe gegenüber dem Betrachter in die jeweils gewünschte Lage gebracht werden kann. Die Neigung wird durch einen nicht sichtbar dargestellten rückseitig im Gerät angebrachten Stellkeil verändert.

Das Gerät kann selbstverständlich auch bei nicht aus dem Gehäuse herausgeschwenkten Lautsprecherboxen betrieben werden. Die Außenkontur der Frontscheibe kann je nach Gestaltungform auch eine gewölbte Linienführung aufweisen.

**Patentansprüche**

1.   Fernsehgerät, das
     – über einen Fernbedienungsgeber zu bedienen ist,
     – beidseitig in den Seitenwandflächen (5,5') je eine Kammer aufweist, in die lagenveränderbare Lautsprecherboxen (14,14') eingesetzt sind,

    **gekennzeichnet**, durch die Kombination folgender Merkmale:

– die Kammern für die Lautsprecherboxen weisen zur Frontseite hin schräg nach außen verlaufende Schallführungsflächen (15,15') auf,

– die gesamte Frontseite des Gerätes besteht aus einer mit dem Gerät (1) mechanisch verbundenen, kugelkappenförmig oder kissenförmig gekrümmten, farblich getönten, mit rechteckiger Außenkontur versehenen rahmenlosen Scheibe (2),

– die Krümmung der Frontscheibe ist über alle Flächen im sichtbaren Bildbereich (2') der Krümmung der Bildröhre bei geringem Abstand angepasst,

– die Außenwandflächen (5,5',6,7) des Gehäuses schließen sich hinter der Frontscheibe konisch verjüngend an,

– das so in Form eines Pyramidenstumpfes gebildete Gehäuse weist eine nach innen kugelkappenförmig gewölbte Rückwandfläche (8) auf,

– die Deckfläche (7) weist mittig eine Vertiefung zur Aufnahme eines Fernbedienungsgebers (11) auf,

– beidseitig neben dieser Vertiefung sind Griffleisten (12,12') durch ausgeformte Griffmulden (13,13') gebildet.

**Claims**

1.    Television set which

– can be operated via a remote control transmitter,

– exhibits on both sides, in each of the side wall surfaces (5, 5'), a chamber into which variable-position loudspeakers (14, 14') are inserted,

characterised by the combination of the following features:

– the chambers for the loudspeakers exhibit sound guidance surfaces (15, 15') running obliquely outwards towards the front side,

– the whole front side of the set comprises a frameless pane (2), which is mechanically connected to the set (1), is curved in a spherical cap or cushion shape, is colour-tinted and is provided with a rectangular outer contour,

– the curvature of the front pane is matched across all surface-areas in the visible image area (2') to the curvature of the picture tube at a small distance.

– the outer wall surfaces (5,5', 6,7) of the housing join together behind the front pane in a conically tapered form,

– the housing thus formed in the shape of a truncated pyramid exhibits a rear wall surface (8) which is inwardly arched in the shape of a spherical cap,

– the cover surface (7) exhibits in its centre a recess for holding a remote control transmitter (11),

– on both sides next to this recess, gripping strips (12, 12') are formed by formed-out recessed grips (13, 13').

**Revendications**

1.    Appareil de télévision, qui

– doit être commandé par l'intermédiaire d'un générateur de télécommande,

– possède des deux côtés, dans les surfaces (5, 5') de ses parois latérales, des chambres respectives dans lesquelles sont insérées des enceintes de haut-parleurs (14, 14') dont la position peut être modifiée,

caractérisé par la combinaison des caractéristiques suivantes :

– les chambres pour les enceintes de haut-parleurs possèdent des surfaces de guidage du son (15,15'), qui s'étendent obliquement vers l'extérieur en direction de la face avant,

– l'ensemble de la face avant de l'appareil est constitué par une plaque (2) sans cadre, qui est raccordée mécaniquement à l'appareil (1), est cintrée sous la forme d'une calotte sphérique ou d'un coussin, est colorée et possède un contour extérieur rectangulaire,

– sur toutes les surfaces situées dans la zone d'image visible (2'), la courbure de la plaque avant est adaptée, à une faible distance, à la courbure du tube image,

– les surfaces de parois extérieures (5,5',6,7) du boîtier se raccordent avec une forme rétrécie conique en arrière de la plaque avant,

– le boîtier ainsi agencé sous la forme d'un tronc de pyramide possède une surface de paroi arrière (8) cintrée vers l'intérieur avec une forme de calotte sphérique,
– la surface supérieure (7) possède en son centre un renfoncement servant à recevoir un générateur de télécommande (11),
– des barrettes de préhension (12,12') sont formées, des deux côtés, à proximité de ce renfoncement, par des évidements de préhension conformés (13,13').

Fig.1

Fig.2